# EUROPÄISCHE PATENTSCHRIFT

(11) **EP 1 685 268 B1**
(45) Veröffentlichungstag und Bekanntmachung des Hinweises auf die Patenterteilung: **09.01.2019**
(21) Anmeldenummer: 04798037.0
(22) Anmeldetag: 22.11.2004
(51) Int. Cl.: C22F 1/05

(54) **VERFAHREN ZUR HERSTELLUNG EINES AUTOMOBILKAROSSERIEBAUTEILS**
METHOD OF MANUFACTURING AN AUTOMOBILE BODY PART
PROCÉDÉ DE FABRICATION D'UNE PIECE DE CARROSSERIE DE VEHICULE AUTOMOBILE

(30) Priorität: 20.11.2003 EP 03405826
(43) Veröffentlichungstag der Anmeldung: 02.08.2006
(73) Patentinhaber: Novelis, Inc., Atlanta, GA 30326 (US)
(72) Erfinder: BASSI, Corrado, CH-3968 Veyras (CH); TIMM, Juergen, 78256 Steisslingen (DE)
(74) Vertreter: Weickmann & Weickmann PartmbB
(86) Internationale Anmeldenummer: PCT/EP2004/013233
(87) Internationale Veröffentlichungsnummer: WO 2005/049877

(56) Entgegenhaltungen:
- EP-A- 0 811 700
- WO-A-00/52216
- US-A- 4 082 578
- US-A- 4 525 326
- R.DEVELAY: "TRAITEMENTS DE MIS EN SOLUTION, TREMPE, MATURATION, REVENU, OU TRAITEMENT DE DURCISSEMENT STRUCTURAL" TECHNIQUES DE L'INGÉNIEUR, 1993, Seiten 1-20, XP008032501 PARIS

## Beschreibung

Die Erfindung betrifft ein Verfahren zur Herstellung eines Automobilkarosseriebauteils aus Blech aus einer Aluminiumlegierung vom Typ AlMgSi. Weiter wird hierin eine Automobilkarosserie bzw. eine Komponente einer Automobilkarosserie mit wenigstens einem ersten Bauteil aus Blech aus einer ersten Aluminiumlegierung und wenigstens einem zweiten Bauteil aus Blech aus einer zweiten Aluminiumlegierung offenbart, wobei die erste und die zweite Aluminiumlegierung vom Typ AlMgSi sind und die zweiten Bauteile gegenüber den ersten Bauteilen nach einer Warmaushärtung der Karosserie bzw. der Karosseriekomponente tiefere mechanische Festigkeitswerte aufweisen.

Bei Automobilkarosseriebauteilen, Automobilkarosserien bzw. Komponenten von Automobilkarosserien tritt eine Warmaushärtung beispielsweise unter den Glühbedingungen beim Lackeinbrennen oder bei einer separaten durchgeführten Wärmebehandlung auf.

Die zunehmende Bedeutung der Herstellung leichterer Automobile mit dem Ziel einer Energieeinsparung hat zur Entwicklung einer grossen Anzahl von Aluminiumlegierungen für Automobilanwendungen geführt.

Verschiedene Komponenten in einem Automobil verlangen meistens auch unterschiedliche Eigenschaften. Beispielsweise sollte eine Aluminiumlegierung für Aussenblechanwendungen sehr gut umformbar sein, um Streckziehen, Tiefziehen und Biegen zu ermöglichen, und gleichzeitig eine hohe Festigkeit nach dem Lackeinbrennen erreichen.

In Europa werden für Aussenblechanwendungen, insbesondere für Motorhauben, bereits in grösserem Ausmass AlMgSi-Legierungen, wie z.B. die Legierung AA 6016, verwendet.

Insbesondere im Hinblick auf die Schrottverwertung und die Rezyklierbarkeit wäre es besonders vorteilhaft und zweckmässig, wenn für alle Aluminiumblechanwendungen in der Karosserie Aluminiumlegierungen, die derselben Legierungsfamilie angehören, eingesetzt werden könnten. Aus der US-A-4 082 578
und der EP-A-0 811 700 sind für Innen- und Aussenbiechanwendungen bei Automobilkarosserien Aluminiumlegierungen vom Typ AlMgSi bekannt.

WO 00/52216 A1 bezieht sich auf ein Strukturbauteil aus einer Aluminiumlegierung vom Typ AlMgSi, mit hohem Aufnahmevermögen für kinetische Energie durch plastische Verformung, welches dadurch gekennzeichnet ist, dass die Legierung (in Gew.%) Silizium 0,45 bis 0,85, Magnesium 0,35 bis 1,0, Kupfer 0,05 bis 0,30, Eisen 0,05 bis 0,25, Vanadium max. 0,25, Mangan max. 0,10 sowie herstellungsbedingte Verunreinigungen einzeln max. 0,05, insgesamt max. 0,15 und Aluminium als Rest enthält und das Strukturbauteil aus gewalztem Band oder Blech der Legierung gefertigt ist. Das Strukturbauteil kann als Sicherheitsteil im Fahrzeugbau verwendet werden.

Aluminiumlegierungen im Strukturbereich eines Fahrzeugs verbessern das Fahrverhalten (Fahrzeugsteifigkeit, Achslastverteilung, Schwerpunktslage etc.). Derartige Konstruktionen können zudem eine hohe Fähigkeit zur Energieabsorption im Crashfall aufweisen. In der EP-A-1 165 848 sind aus Blech gefertigte Strukturbauteile aus einer AlMgSi-Legierung offenbart.

Insbesondere in Europa hat die Herabsetzung des Verletzungsrisikos bei Automobilunfällen hohe Priorität. Durch Verbesserung der Sicherhett der Automobile lässt sich dieses Ziel auf wirksamste Art erreichen. Bisher wurde jedoch zur Verminderung der Schwere von Verletzungen bei Fussgängern und Motorradfahrern, die bei einem Unfall auf die Frontpartie eines Autos aufschlagen, sehr wenig getan. Durch die Schaffung von Frontpartien von Automobilen mit einem entsprechenden Energieabsorptionsverhalten können wesentliche Verbesserungen erreicht werden.

Fussgängerschutzmassnahmen an Automobilkarosserien können zur Vermeidung ernsthafter und tödlicher Verletzungen bei Zusammenstössen im mittleren Geschwindigkeitsbereich sehr wirksam sein. Bei den meisten Verkehrsunfällen mit Fussgängem kollidiert ein Automobil mit den Betroffenen frontal. Dabei wird die Verletzung des Fussgängers nur zum Teil durch den anfänglichen Zusammenstoss verursacht. In vielen Fällen knickt der Oberkörper des Angefahrenen ein, und sein Kopf schlägt auf der Motorhaube auf.

Die meisten Kopfverletzungen werden bei Erwachsenen durch das obere Ende und bei Kindern durch den vorderen Bereich der Motorhaube erzeugt. Die Vorderkante der Motorhaube ist besonders kritisch bezüglich Verletzungen im Oberschenkel- oder im Hüftbereich. Detaillierte Veränderungen im Blechaufbau des Motorhaubenrandes sind notwendig, um die Steifigkeit zu reduzieren und genügend Stauchtiefe vorzusehen. Dies kann durch Schwächung oder Zurücknahme der Innenblechverstärkungen der Motorhaube, des Verschlusses und der Verschlussquerstreben erreicht werden.

Durch verschiedene aktive und passive Massnahmen werden Frontklappen und andere grossflächige Karosserieelemente von Automobilen "weicher" gemacht. Die Bauteile werden dabei so ausgestaltet oder aktiv verändert, dass sie bei einem Aufprall einen grossen Teil der kinetischen Energie durch plastische Verformung aufnehmen können. Diese Massnahmen führen zu weniger gravierenden Verletzungen.

Zu den passiven Massnahmen gehören das Design, die Konstruktion und das Material. Bezüglich des Materials sind verschiedene Materialverbunde wie z.B. Sandwichkonstruktionen mit Schaumwerkstoffen bekannt. Es wurden aber bisher noch keine Versuche unternommen, relativ weiche Aluminiumlegierungen einzusetzen.

Der Erfindung liegt die Aufgabe zugrunde, ein Automobilkarosseriebauteil sowie eine Automobilkarosserie bzw. eine Komponente einer Automobilkarosserie der eingangs genannten Art zu schaffen, die neben dem gemeinsamen Rezyklieren der Prozessschrotte bei der Herstellung der verschiedenen Bauteile und einer einfachen Schrottverwertung der Karosseriebauteile in Altautos zu einem im Vergleich zu Lösungen nach dem Stand der Technik verbesserten Aufprallschutz für Fussgänger führt.

Bezüglich des einschaligen Automobilkarosseriebauteils führt zur erfindungsgemässen Lösung der Aufgabe, dass im Blech ein wesentlicher Teil der zur Erzielung einer Warmaushärtung in fester Lösung benötigten Elemente Mg und Si zur Vermeidung einer Warmaushärtung in der Form ausgeschiedener Mg₂Si- und/oder Si-Partikel vorliegt.

Bezüglich der mehrschaligen Automobilkarosserie bzw. der aus einem Aussen- und einem Innenteil hergestellten Komponente einer Automobilkarosserie führt zur erfindungsgemässen Lösung der Aufgabe, dass wenigstens im Blech aus der zweiten Aluminiumlegierung ein wesentlicher Teil der zur Erzielung einer Warmaushärtung in fester Lösung benötigten Elemente Mg und Si zur Vermeidung einer Warmaushärtung vor der Warmaushärtung der Karosserie bzw. der Karosseriekomponente in der Form ausgeschiedener Mg₂Si- und/oder Si-Partikel vorliegt.

Der wesentliche Kern der Erfindung liegt somit darin, die "weichen" Bauteile mit einer vorgegebenen Gefügestruktur einzusetzen, so dass -- im Gegensatz zu den "harten" Bauteilen -- unter üblichen Lackeinbrennbedingungen keine oder eine verminderte Warmaushärtung auftritt und demzufolge auch keine weitere bzw. eine verminderte Zunahme der mechanischen Festigkeitswerte erfolgt, sondern die weichen Bauteile die durch die vorgegebene Gefügestruktur bereits eingestellten Werte beibehalten bzw. das bei einer Warmaushärtung maximal mögliche Festigkeitsniveau nicht mehr erreichen.

Als harte erste Aluminiumlegierung wird eine Legierung offenbart, die
0,6 bis 1,2 Gew.-% Silizium
0,3 bis 0,8 Gew.-% Magnesium
max. 0.8 Gew.-% Kupfer
max. 0,4 Gew.-% Eisen
max. 0,3 Gew.-% Mangan
max. 0,2 Gew.-% Vanadium
sowie herstellungsbedingte Verunreinigungen und Aluminium als Rest enthält.

Die harte erste Aluminiumlegierung umfasst insbesondere die üblichen Karosserieaussenhautwerkstoffe wie z.B. AA 6016 und AA 6111.

Grundsätzlich kann als weiche zweite Aluminiumlegierung eine mit der ersten harten Aluminiumlegierung identische Legierung eingesetzt werden, jedoch wird im Allgemeinen eine Zusammensetzung mit einem wesentlich tieferen Festigkeitsniveau bevorzugt.

Als weiche zweite Aluminiumlegierung wird eine Legierung offenbart, die
0,25 bis 0,60 Gew.-% Silizium
0,25 bis 0,60 Gew.-% Magnesium
0,05 bis 0.30 Gew.-% Kupfer
max. 0,40 Gew.-% Eisen
max. 0,30 Gew.-% Mangan
max. 0,20 Gew.-% Vanadium
sowie herstellungsbedingte Verunreinigungen einzeln max. 0,05 Gew.-%, insgesamt max. 0,15 Gew.-%, und Aluminium als Rest enthält.

Für die einzelnen Legierungselemente der zweiten Aluminiumlegierung gelten die folgenden Gehaltsbereiche:
0,30 bis 0,50 Gew.-% Silizium
0,30 bis 0,50 Gew.-% Magnesium
max. 0.20 Gew.-% Kupfer
0,05 bis 0,20 Gew.-% Eisen
max. 0,10 Gew.-% Mangan
max. 0,15 Gew.-% Vanadium

Das gewünschte Festigkeitsniveau bzw. der gewünschte Weichheitsgrad der weichen zweiten Bauteile wird hauptsächlich über den Mg- und den Si-Gehalt der zweiten Aluminiumlegierung in Kombination mit einer thermischen Behandlung der aus der Legierung hergestellten Bleche vor deren Umformung zu den zweiten Bauteilen eingestellt. Mit der thermischen Behandlung wird sichergestellt, dass die gewünschten tiefen mechanischen Festigkeitswerte der weichen zweiten Bauteile auch nach Durchführung eines Lackeinbrennzyklus an der Automobilkarosserie im Wesentlichen unverändert sind bzw. nur noch ein gegebenenfalls höheres, jedoch unterhalb der maximal möglichen Werte liegendes Festigkeitsniveau erreichen. Je nach Durchführung bewirkt die thermische Behandlung
- eine Ausscheidung eines wesentlichen Teils der Legierungselemente Mg und Si aus der festen Lösung in der Form von Si- und Mg₂Si-Partikeln sowie eine Vergröberung derselben, so dass die genannten Legierungselemente für die nachfolgende Warmaushärtung nicht mehr in vollem Umfang zur Verfügung stehen, und/oder
- die Verhinderung einer Rücklösung der ausgeschiedenen Mg₂Si- und Si-Partikel, so dass die Legierungselemente Mg und Si für eine weitere Aushärtung bei der nachfolgenden Warmauslagerung während eines nachfolgenden Lackeinbrennzyklus ebenfalls nicht mehr in vollen Umfang zur Verfügung stehen.

Es ist auch denkbar, anstelle eines "harten" ersten Bauteils ein "weiches", d.h. nicht warmaushärtbares Bauteil einzusetzen und die unterschiedlichen Festigkeitswerte des ersten und des zweiten Bauteils über die Konzentration der Legierungselemente Mg und Si einzustellen.

Die "weichen" Bleche bzw. die Bleche aus der zweiten Aluminiumlegierung können auf herkömmliche Art über Strang- oder Bandgiessen mit nachfolgendem Warm- und/oder Kaltwalzen mit oder ohne Zwischenglühungen hergestellt werden.

Bei dem herkömmlichen Fertigungsprozedere von Karosserieblechen aus AlMgSi-Werkstoffen wird darauf geachtet, dass ausscheidungsrelevante Legierungselemente nach einer Lösungsglühung bzw. vor einer Warmaushärtung praktisch vollständig in fester Lösung sind und allenfalls ein als unwesentlich zu bezeichnender, bei dem gewählten Fertigungsprozedere nicht vermeidbarer Teil in ausgeschiedener Form vorliegt.

Hiervon unterscheiden sich die hierin offenbarten Karosseriebleche. Der Anteil der nach einer Lösungsglühung bzw. vor einer Warmaushärtung in ausgeschiedener Form vorliegenden ausscheidungsrelevanten Legierungselemente bewirkt eine Änderung der mechanischen Festigkeitswerte, die ausserhalb der bei einem herkömmlichen Fertigungsprozedere im Rahmen von Fertigungstoleranzen liegenden Abweichungen von einem vorgegebenen Sollwert liegt. Der Anteil der in ausgeschiedener Form vorliegenden ausscheidungsrelevanten Legierungselemente ist demzufolge als wesentlich zu bezeichnen.

Der bei den Blechen aus der zweiten Aluminiumlegierung gewünschte Ausscheidungszustand der Legierungselemente Mg und Si kann in an sich bekannter Art auf unterschiedliche Weise erreicht werden. Zu den Verfahrensschritten, die vom herkömmlichen Fertigungsprozedere von AlMgSi-Karosseriewerkstoffen abweichen und zur gewünschten Vorausscheidung der aushärtungsrelevanten Legierungselemente Mg und Si führen, gehören die folgenden Schritte, die einzeln oder in Kombination durchgeführt werden können:
- Keine Homogenisierungsglühung des Gussbarrens, lediglich Aufheizen auf Warmwalztemperatur und sofort Warmwalzen.
- Durchführung einer "partiellen Lösungsglühung" der auf Enddicke gewalzten Bleche während einer kurzen Zeitdauer bei verhältnismässig tiefer Temperatur mit einer kontinuierlichen Glühung in einem Bänddurchlaufofen in einem Temperaturbereich von etwa 450°C bis 520°C während max. 30 sec, gegebenenfalls unter Anwendung milder Abkühlungsbedingungen.
- Durchführung einer "partiellen Heterogenisierungsglühung" der auf Enddicke gewalzten Bleche mit einer Glühung von Coils in einem Kammerofen mit einer Haltezeit von etwa 1 bis 4 h in einem Temperaturbereich von etwa 330°C bis 400°C.

Das Verfahren gemäß der Erfindung wird durch die Ansprüche definiert.

Grundsätzlich erfolgt die Auswahl der zweiten Aluminiumlegierung in erster Linie aufgrund eines vorgegebenen Festigkeitsniveaus. Die Festlegung der erforderlichen Temperatur und der Zeitdauer bei Durchführung der vorstehend genannten Glühungen zur Erzielung eines Gefügezustandes, der bei einer nachfolgenden Warmauslagerung nicht zu einem weiteren bzw. nur zu einem definiert begrenzten Anstieg der mechanischen Festigkeitswerte führt, erfolgt für jede Legierung bzw. jede Anwendung individuell anhand einer einfachen Versuchsreihe.

Das tiefste Festigkeitsniveau ergibt sich dann, wenn der Anteil der zur Warmaushärtung beitragenden, in fester Lösung vorliegenden Legierungselemente praktisch vernachlässigbar gering ist. Für den Fall, dass z.B. eine Spezifikation für ein Karosseriebauteil aus Blech ein bestimmtes, oberhalb des für eine vorgegebene Legierungszusammensetzung liegendes minimales Festigkeitsniveau verlangt, kann mit derselben Legierungszusammensetzung eine Anpassung des Festigkeitsniveaus dadurch vorgenommen werden, dass der Anteil der zur Warmaushärtung beitragenden, in fester Lösung vorliegenden Legierungselemente höher gewählt bzw. die Wärmebehandlung so gesteuert wird, dass nur ein kleiner Teil als Mg₂Si- und/oder Si-Partikel ausgeschieden wird. Das Bauteil ist dann zugunsten einer höheren Festigkeit etwas weniger "weich".

Bevorzugt sind die weichen zweiten Bauteile Innenbleche eines Karosserieelements, insbesondere einer Motorhaube, und im Frontbereich der Karosserie angeordnete Verkleidungsteile oder Strukturbauteile bzw. Verstärküngselemente. Die weichen zweiten Bauteile können jedoch auch Karosserieelemente sein, die bei herkömmlichen Automobilkarosserien von harten ersten Bauteilen gebildet werden. Ein wesentlicher Einsatzbereich der weichen zweiten Bauteile sind damit tiefgezogene Karosserieteile mit gutem Biegeverhalten.

Ein weiches Bauteil kann beispielsweise auch als Innenblech einer Stahl- oder Kunststoffhaube, als Verkleidungsteil im vorderen Bereich eines Autos (z.B. Kühlergrill, Stossfängerverkleidung, Spoiler etc.) oder als Strukturbauteil bzw. Verstärkungsblech im Frontbereich (z.B. Verstärkungsblech im "Verschlussbereich" der Haube, Trägerblech für Kühler, Scheinwerfer und andere Aggregate im Frontbereich etc.) eingesetzt werden.

Eine weitere, in dieser Art nicht bekannte Anwendung im Karosseriebau können zudem "vorgehängte" Schutzbleche darstellen. In diesem Fall spielt das festgestellte verbesserte Biegeverhalten eine besonders wichtige Rolle, da es beim Aufprall eine Riss- oder Splitterbildung in den Falten verhindert, wodurch die Verletzungsgefahr weiter minimiert wird.

Weitere Vorteile, Merkmale und Einzelheiten der Erfindung ergeben sich aus der nachfolgenden Beschreibung sowie anhand der Zeichnung; dies zeigt in
- - Fig. 1: ein Diagramm mit den Dehngrenzen einer ersten und einer zweiten Aluminiumlegierung in verschiedenen Auslagerungszuständen;
- - Fig. 2: ein Diagramm mit den Differenzen der Dehngrenzen der ersten und der zweiten Aluminiumlegierung von Fig. 1 in verschiedenen Auslagerungszuständen zu den Dehngrenzen der Legierungen im Lieferzustand T4;
- - Fig. 3 und 4: Fotografische Aufnahmen unter einem Rasterelektronenmikroskop im Compomodus an Metallschliffen von Blechproben mit unterschiedlichem Anteil ausgeschiedener Mg₂Si-Partikel;
- - Fig. 5: die Abhängigkeit der Dehngrenze einer beispielhaften AlMgSi-Legierung vom Volumenanteil ausgeschiedener Mg₂Si-Partikel anhand einer Modellrechnung.

### Beispiel 1 (nicht erfindungsgemäß)

Aus einer ersten Aluminiumlegierung A (AA 6016) und einer zweiten Aluminiumlegierung B mit den in der Tabelle 1 angegebenen chemischen Zusammensetzungen wurden auf herkömmliche Art durch vertikales Stranggiessen, Homogenisierungsglühen, Warm- und Kaltwalzen Bänder einer Dicke von 1,2 mm hergestellt.

**Tabelle 1**

| Leg. | Si | Fe | Cu | Mn | Mg | Cr | Zn | Ti | V |
|---|---|---|---|---|---|---|---|---|---|
| A | 1.14 | 0.21 | 0.08 | 0.07 | 0.55 | 0.013 | 0.003 | 0.033 | <0.005 |
| B | 0.42 | 0.17 | 0.08 | 0.07 | 0.40 | 0.018 | <0.003 | 0.024 | 0.006 |

Die Bänder wurden in einem Banddurchlaufglühofen einer Lösungsglühung (Legierung A) bzw. einer partiellen Lösungsglühung (Legierung B) unterworfen, nachfolgend an bewegter Luft abgeschreckt und durch Lagerung während einigen Tagen bei Raumtemperatur zum Lieferzustand T4 ausgelagert. Für die beiden Aluminiumlegierungen A und B wurden die folgenden Lösungsglühbedingungen gewählt:

| | |
|---|---|
| Legierung A | 550°C / 30sec |
| Legierung B | 500°C / 20 sec |

An Blechproben aus den Aluminiumlegierungen A und B im Lieferzustand T4 wurde mit einer Glühung bei einer Temperatur von 185°C während einer Zeitdauer von 20 min ein Lackeinbrennzyklus simuliert. Um den Einfluss einer Kaltverformung (KV) auf die Dehngrenze Rp0.2, die Bruchspannung Rm und die Bruchdehnung A80 zu untersuchen, wurden die Blechproben im Lieferzustand zusätzlich 2% kaltverformt. Eine weitere Serie von Blechproben wurde im Lieferzustand 2% kaltverformt und anschliessend der vorstehend erwähnten Glühbehandlung unterzogen.

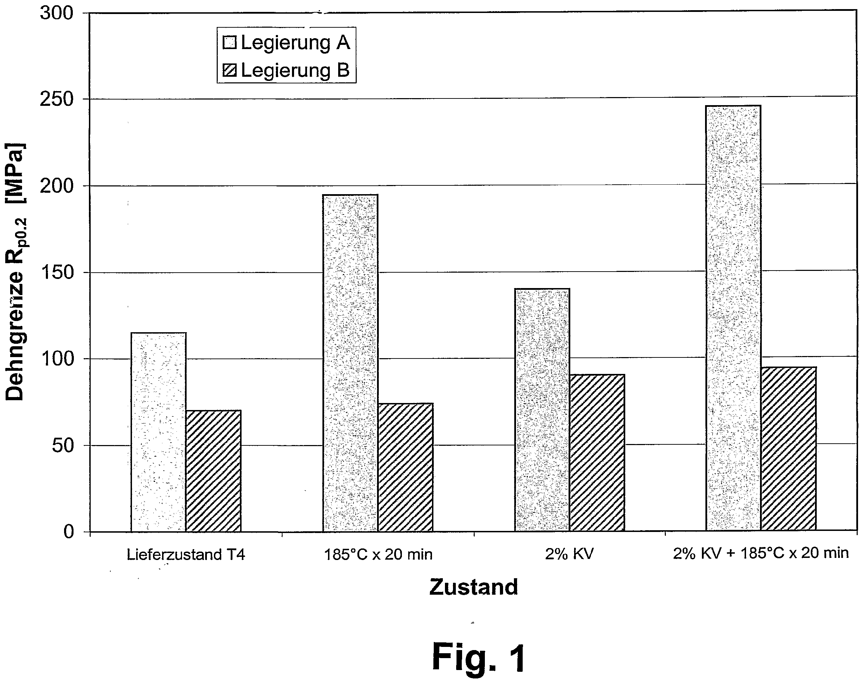

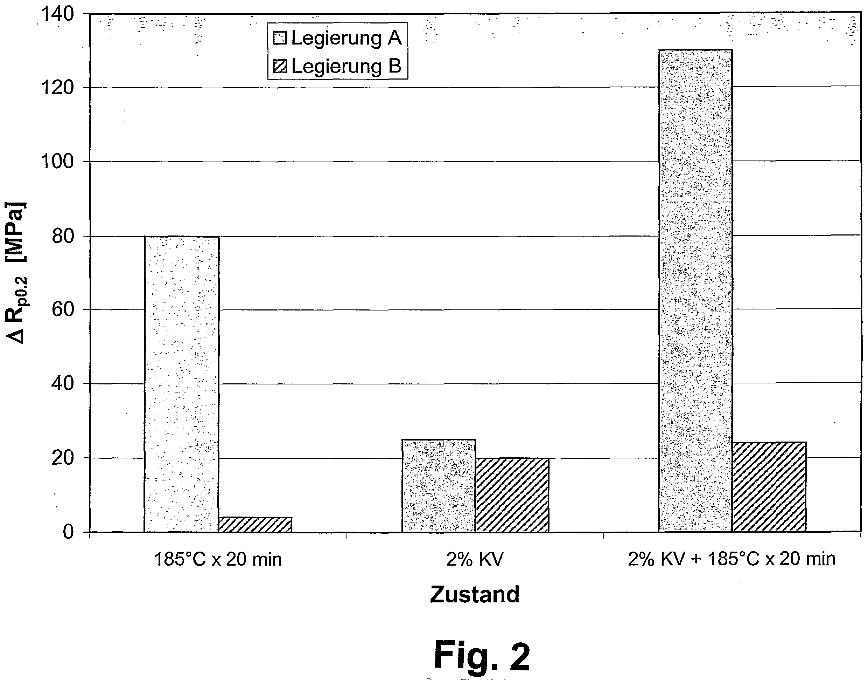

Die in der Tabelle 2 zusammengestellten mechanischen Festigkeitswerte der beiden Aluminiumlegierungen A und B in den verschiedenen untersuchten Zuständen und die in den Fig. 1 und 2 zusätzlich graphisch dargestellten Werte für die Dehngrenze Rp0.2 zeigen für beide Aluminiumlegierungen A und B im Lieferzustand mit 2% Kaltverformung eine schwache und betragsmässig etwa gleiche Zunahme der Dehngrenze. Wird am Lieferzustand nur eine Lackeinbrennglühung durchgeführt, erfolgt bei der Legierung A eine starke Erhöhung der Dehngrenze, während die Legierung B praktisch keinen Aushärtungseffekt zeigt. Das unterschiedliche Verhalten der beiden Aluminiumlegierungen A und B unter Lackeinbrennbedingungen zeigt sich noch deutlicher bei einer kombinierten Anwendung einer Kaltverformung von 2% mit nachfolgender Glühung bei 185°C während 20 min, wie sie in der Praxis bei der Fertigung von Automobilkarosseriekomponenten häufig auftritt.

**Tabelle 2**

| Legierung | Zustand | Rp0.2 [MPa] | Rm [MPa] | A80 [%] | Δ Rp0.2 [MPa] |
|---|---|---|---|---|---|
| A | Lieferzustand T4 | 115 | 225 | 25.4 | |
| | 185°C x 20 min | 195 | 271 | 20.8 | 80 |
| | 2% KV | 140 | 251 | 24.3 | 25 |
| | 2% KV + 185°C x 20 min | 245 | 295 | 15.4 | 130 |
| B | Lieferzustand T4 | 70 | 129 | 27.7 | |
| | 185°C x 20 min | 74 | 130 | 25.9 | 4 |
| | 2% KV | 90 | 133 | 25.3 | 20 |
| | 2% KV + 185°C x 20 min | 94 | 149 | 18.6 | 24 |

### Beispiel 2 (nicht erfindungsgemäß)

An zweimal je 2 Zugproben einer Dicke von 0,85 mm und einer Breite von 12,5 mm der Legierung B von Beispiel 1 in unterschiedlichen Wärmebehandlungszuständen wurde in Zugversuchen die Bruchspannung Rm, die Dehngrenze Rp0.2 und die Bruchdehnung A50 ermittelt. Die untersuchten Wärmebehandlungen sind in Tabelle 3 zusammengestellt. Die Lösungsglühung erfolgte in einem Salzbad bei der angegebenen Temperatur während der angeführten Zeitdauer. Anschliessend wurden die Proben in Wasser abgeschreckt, während 24 h bei Raumtemperatur und nachfolgend während weiteren 24 h bei einer Temperatur von 65 °C gelagert. Diese Wärmebehandlung führt etwa zu einem T4 Zustand. Ein Teil dieser Proben A bis L wurde einer Warmaushärtung bei 205°C während 1 h unterworfen, entsprechend etwa einem Zustand T6.

**Tabelle 3**

| Probe | Lösungsglühung |
|---|---|
| A | 520 °C / 5 s |
| B | 520 °C / 10 s |
| C | 530 °C / 0 s |
| D | 530 °C / 5 s |
| E | 530 °C / 10 s |
| F | 530 °C / 20 s |
| G | 540 °C / 0 s |
| H | 540 °C / 5 s |
| I | 540 °C / 10 s |
| J | 540 °C / 20 s |
| K | 540 °C / 60 s |
| L | 540 °C / 10 min |

Die Ergebnisse der an je 2 Proben durchgeführten Zugversuche sind in Tabelle 4 für die Proben im Zustand T4 und in Tabelle 5 für die Proben im Zustand T6 zusammengestellt.

**Tabelle 4**

| Probe | Rp0.2 [MPa] | Rm [MPa] | A50 [%] |
|---|---|---|---|
| A1 | 43,9 | 115,6 | 16,3 |
| A2 | 44,6 | 114,5 | 23,3 |
| B1 | 43,9 | 114,9 | 20,2 |
| B2 | 44,2 | 117,3 | 23,2 |
| C1 | 44,1 | 116,4 | 24,2 |
| C2 | 40,6 | 112,9 | 26,8 |
| D1 | 45,2 | 114,8 | 30,9 |
| D2 | 43,6 | 116,0 | 22,0 |
| E1 | 44,0 | 119,5 | 15,6 |
| E2 | 45,3 | 117,2 | 25,5 |
| F1 | 48,5 | 125,2 | 19,0 |
| F2 | 48,4 | 124,9 | 26,6 |
| G1 | 41,5 | 112,1 | 26,1 |
| G2 | 42,9 | 111,1 | 25,1 |
| H1 | 43,7 | 115,3 | 25,1 |
| H2 | 43,9 | 114,0 | 20,2 |
| I1 | 44,0 | 119,0 | 21,7 |
| I2 | 45,3 | 118,7 | 24,9 |
| J1 | 48,3 | 127,6 | 15,1 |
| J2 | 47,6 | 126,1 | 24,4 |
| K1 | 56,8 | 137,8 | 15,6 |
| K2 | 56,4 | 137,9 | 16,2 |
| L1 | 63,1 | 152,4 | 20,7 |
| L2 | 61,7 | 144,1 | 18,1 |

**Tabelle 5**

| Probe | Rp0.2 [MPa] | Rm [MPa] | A50 [%] |
|---|---|---|---|
| A1 | 47,1 | 117,2 | 25,1 |
| A2 | 46,5 | 116,1 | 21,6 |
| B1 | 52,5 | 119,9 | 24,8 |
| B2 | 54,3 | 123,4 | 25,3 |
| C1 | 40,9 | 111,0 | 26,1 |
| C2 | 41,4 | 111,2 | 27,9 |
| D1 | 49,9 | 119,6 | 24,4 |
| D2 | 53,2 | 120,4 | 25,2 |
| E1 | 50,6 | 121,4 | 25,3 |
| E2 | 57,2 | 123,5 | 23,9 |
| F1 | 61,5 | 130,9 | 24,7 |
| F2 | 61,7 | 129,1 | 22,9 |
| G1 | 44,7 | 114,1 | 28,1 |
| G2 | 44,0 | 113,3 | 26,5 |
| H1 | 45,4 | 119,9 | 20,5 |
| H2 | 47,5 | 118.4 | 19,2 |
| I1 | 55,6 | 125,7 | 25,0 |
| I2 | 52,6 | 124,5 | 25,4 |
| J1 | 65,9 | 135,1 | 18,5 |
| J2 | 64,5 | 135,1 | 18,9 |
| K1 | 98,3 | 154,6 | 10,6 |
| K2 | 98,2 | 153,5 | 11,3 |
| L1 | 138,4 | 177,3 | 9,0 |
| L2 | 137,4 | 178,0 | 11,4 |

Von den Proben C und L aus Tabelle 4 wurden Metallschliffe angefertigt. Unter einem Rasterelektronenmikroskop wurde im Compomodus auf bekannte Art der Volumenanteil der ausgeschiedenen Mg₂Si-Partikel am Gesamtvolumen der Legierung durch Ausmessen der entsprechenden Flächenanteile in 12 Flächenbereichen ermittelt. Als ausgeschiedene Mg₂Si-Partikel werden hier Partikel mit einem Durchmesser > 0,1 µm bezeichnet.

Die gemittelten Werte ergaben für die Probe C einen Volumenanteil von 0,444 ± 0,077 %, was einem Anteil von etwa 50 % des theoretisch möglichen Volumenanteils entspricht. Für die Probe L ergaben die gemittelten Werte einen Volumenanteil von 0,071 ± 0,029 %, entsprechend einem Anteil von etwa 8 % des theoretisch möglichen Volumenanteils.

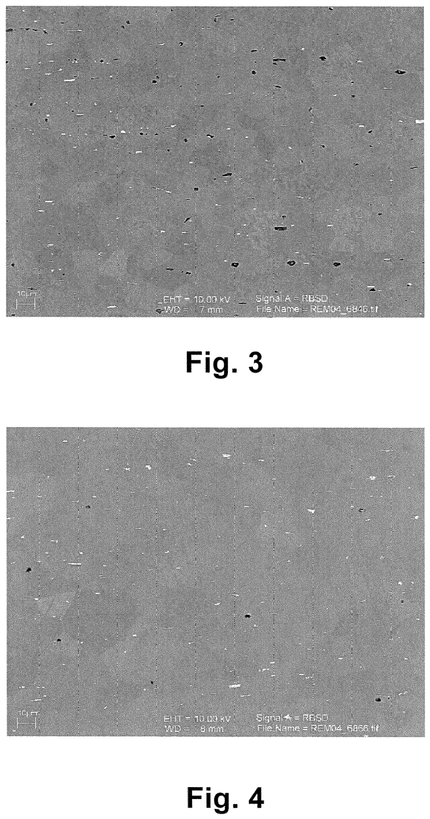

Die in Fig. 3 von der Probe C und in Fig. 4 von der Probe L gezeigten REM-Aufnahmen im Compomodus lassen die schweren eisenhaltigen Ausscheidungen als helle und die leichten Mg₂Si-Partikel als dunkle Flecken erscheinen. Der im Vergleich zur Probe L höhere Volumenanteil ausgeschiedener Mg₂Si-Partikel der Probe C ist deutlich zu erkennen.

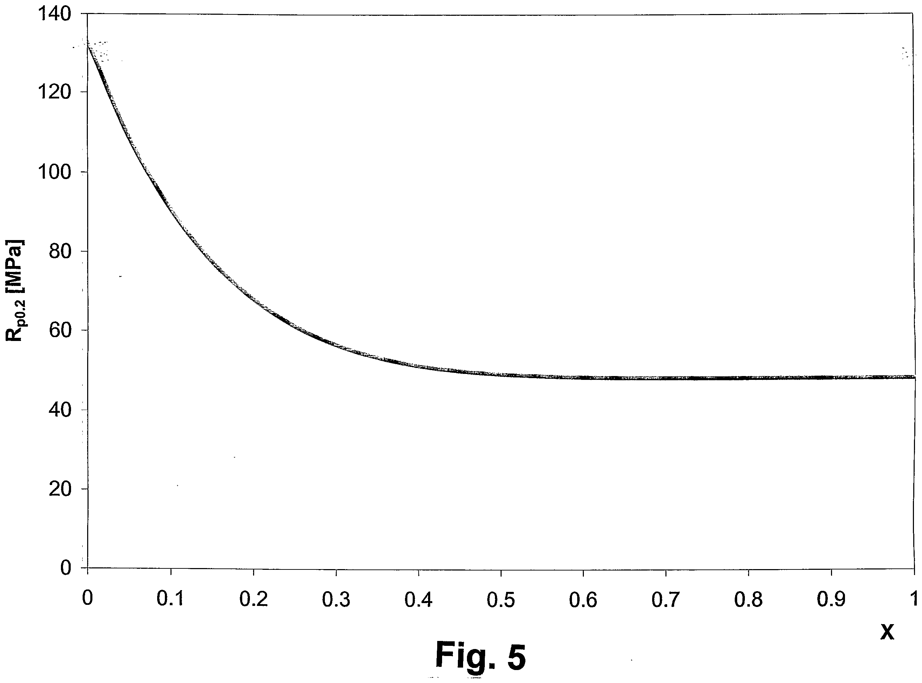

Aus den an den Proben A bis L von Tabelle 5 ermittelten Werten für die Dehngrenze Rp0.2 wurde anhand einer Modellrechnung die Abhängigkeit der Dehngrenze Rp0.2 vom Volumenanteil der ausgeschiedenen Mg₂Si-Partikel bestimmt und in Fig. 5 grafisch dargestellt. Die Werte auf der x-Achse entsprechen dem Verhältnis des Volumenanteils der Vorausscheidungen von Mg₂Si zum theoretisch möglichen Volumenanteil.

Die Abbildung zeigt deutlich, dass durch eine gezielte Steuerung der Vorausscheidung von Mg₂Si die hier als Mass für die "Weichheit" der Legierung gewählte Dehngrenze Rp0.2 in weiten Grenzen variiert werden kann.

## Patentansprüche

1. Verfahren zur Herstellung eines Automobilkarosseriebauteils aus Blech aus einer Aluminiumlegierung vom Typ AlMgSi, wobei die Aluminiumlegierung 0,30 bis 0,50 Gew.-% Silizium
0,30 bis 0,50 Gew.-% Magnesium
max. 0,20 Gew.-% Kupfer
0,05 bis 0,20 Gew.-% Eisen
max. 0,10 Gew.-% Mangan
max. 0,15 Gew.-% Vanadium
sowie herstellungsbedingte Verunreinigungen einzeln max. 0,05 Gew.-%, insgesamt max. 0,15 Gew.-%, und Aluminium als Rest enthält,
umfassend eine thermische Behandlung des aus der Legierung hergestellten Blechs vor dessen Umformung zu dem Bauteil,
wobei die thermische Behandlung Durchführen einer partiellen Lösungsglühung des auf Enddicke gewalzten Bleches mit einer kontinuierlichen Glühung in einem Banddurchlaufofen in einem Temperaturbereich von 450°C bis 520°C während max. 30 sec;
oder
Durchführen einer partiellen Heterogenisierungsglühung des auf Enddicke gewalzten Bleches mit einer Glühung von Coils in einem Kammerofen mit einer Haltezeit von 1 bis 4 h in einem Temperaturbereich von 330°C bis 400°C umfasst,
wobei das Verfahren keine Homogenisierungsglühung eines Gussbarrens, lediglich Aufheizen auf Warmwalztemperatur und sofort Warmwalzen umfasst.

2. Verfahren nach Anspruch 1, wobei die thermische Behandlung Durchführen einer partiellen Lösungsglühung des auf Enddicke gewalzten Bleches mit einer kontinuierlichen Glühung in einem Banddurchlaufofen in einem Temperaturbereich von 450°C bis 520°C während max. 30 sec umfasst.

3. Verfahren nach Anspruch 1, wobei die thermische Behandlung Durchführen einer partiellen Heterogenisierungsglühung des auf Enddicke gewalzten Bleches mit einer Glühung von Coils in einem Kammerofen mit einer Haltezeit von 1 bis 4 h in einem Temperaturbereich von 330°C bis 400°C umfasst.

## Claims

1. Method for producing an automobile body part made of sheet metal of an aluminium alloy of the type AlMgSi, wherein the aluminium alloy contains
from 0.30 to 0.50 wt.% silicon
from 0.30 to 0.50 wt.% magnesium
a maximum of 0.20 wt.% copper
from 0.05 to 0.20 wt.% iron
a maximum of 0.10 wt.% manganese
a maximum of 0.15 wt.% vanadium
and production-related contaminants, of at most 0.05 wt.% individually, in total a maximum of 0.15%, and aluminium as the remainder,
comprising heat treatment of the sheet metal produced from the alloy before said sheet is formed into the body part,
wherein the heat treatment comprises performing partial solution annealing of the sheet metal, which is rolled to the final thickness, by means of continual annealing in a continuous strand furnace in a temperature range of from 450°C to 520°C for a maximum of 30 seconds;
or
performing partial heterogenisation annealing of the sheet metal, which is rolled to the final thickness, by means of annealing coils in a chamber furnace having a holding time of from 1 to 4 hours, in a temperature range of from 330°C to 400°C;
wherein the method does not comprise heterogenisation annealing of a cast ingot, but merely heating to hot rolling temperature and immediately hot rolling.

2. Method according to claim 1, wherein the heat treatment comprises performing partial solution annealing of the sheet metal, which is rolled to the final thickness, by means of continual annealing in a continuous strand furnace in a temperature range of from 450°C to 520°C for a maximum of 30 seconds.

3. Method according to claim 1, wherein the heat treatment comprises performing partial heterogenisation annealing of the sheet metal, which is rolled to the final thickness, by means of annealing coils in a chamber furnace having a holding time of from 1 to 4 hours, in a temperature range of from 330°C to 400°C.

## Revendications

1. Procédé de fabrication d'une pièce de carrosserie automobile en tôle en un alliage d'aluminium de type AlMgSi, dans lequel l'alliage d'aluminium contient 0,30 à 0,50 % en poids de silicium
0,30 à 0,50 % en poids de magnésium
maximum 0,20 % en poids de cuivre
0,05 à 0,20 % en poids de fer
maximum 0,10 % en poids de manganèse
maximum 0,15 % en poids de vanadium
ainsi que des impuretés dues à la fabrication individuellement maximum 0,05 % en poids, dans l'ensemble maximum 0,15 % en poids, et le reste de l'aluminium, comprenant un traitement thermique de la tôle fabriquée à partir de l'alliage avant sa déformation en la pièce,
dans lequel le traitement thermique comprend la réalisation d'un recuit de mise en solution partiel de la tôle laminée à l'épaisseur finale avec un recuit continu dans un four continu pour feuillards dans une plage de température de 450 °C à 520 °C pendant maximum 30 secondes ;
ou
la réalisation d'un recuit d'hétérogénéisation partiel de la tôle laminée à l'épaisseur finale avec un recuit de bobines dans un four à chambre avec un temps de séjour de 1 à 4 h dans une plage de température de 330 °C à 400 °C,
dans lequel le procédé ne comprend aucun recuit d'homogénéisation d'un lingot moulé, juste le chauffage à température de laminage à chaud et immédiatement le laminage à chaud.

2. Procédé selon la revendication 1, dans lequel le traitement thermique comprend la réalisation d'un recuit de mise en solution partiel de la tôle laminée à l'épaisseur finale avec un recuit continu dans un four continu pour feuillards dans une plage de température de 450 °C à 520 °C pendant maximum 30 secondes.

3. Procédé selon la revendication 1, dans lequel le traitement thermique comprend la réalisation d'un recuit d'hétérogénéisation partiel de la tôle laminée à l'épaisseur finale avec un recuit de bobines dans un four à chambre avec un temps de séjour de 1 à 4 h dans une plage de température de 330 °C à 400 °C.
